# FASCICULE DE BREVET EUROPEEN

(11) **EP 1 271 972 B1**
(45) Date de publication et mention de la délivrance du brevet: **23.01.2008**
(21) Numéro de dépôt: 02290985.7
(22) Date de dépôt: 18.04.2002
(51) Int. Cl.: H04Q 7/24

(54) **Système de transmission de signaux numériques**
System zur Übertragung von digitalen Signalen
System for transmission of digital signals

(30) Priorité: 18.06.2001 FR 0107957
(43) Date de publication de la demande: 02.01.2003
(73) Titulaire: Alcatel Lucent, 75008 Paris (FR)
(72) Inventeur: Argouarch, Francis, 29200 Brest (FR); Cournut, Stéphane, 29200 Brest (FR); Guevel, Jean-Luc, 29200 Brest (FR); Leroy, Jean-François, 29850 Gouesnou (FR)
(74) Mandataire: Korakis-Ménager, Sophie

(56) Documents cités:
- EP-A- 0 462 728
- HEIN M: "SS7-GATEWAYS" FUNKSCHAU, FRANZIS-VERLAG K.G. MUNCHEN, DE, vol. 72, no. 3, 22 janvier 1999 (1999-01-22), pages 68-70, XP000833879 ISSN: 0016-2841

## Description

La présente invention concerne le domaine des radiocommunications. Plus précisément, elle se rapporte à un système de transmission de signaux numériques entre deux équipements d'un réseau de radiocommunication.

De manière connue, afin de répondre à la multiplication de nouveaux services, les réseaux de télécommunications tels que les réseaux téléphoniques fixes RNIS (Réseau Numérique à Intégration de Service) ou les réseaux téléphoniques mobiles de type GSM et PCS (Personal Communication System en anglais) véhiculent des signaux numériques selon un protocole de transmission numérique.

Les liaisons numériques de ces réseaux, par exemple de type MIC (Modulation par Impulsion et Codage) transportent indépendamment et sous forme de paquet chaque signal numérique contenant à la fois des informations de signalisation associés au traitement d'un appel et des informations de type voix et/ou données.

De telles liaisons numériques sont utilisées par exemple au niveau d'une interface entre deux équipements afin d'assurer leur interfonctionnement. Un exemple connu est l'interface dite A qui relie dans les réseaux de type GSM et PCS un commutateur d'un service mobile (MSC) et un contrôleur de station de base (BSC). Cette interface A est basée sur le système de signalisation par canal sémaphore couramment appelé SS7. Il existe encore de nombreuses zones ne comportant pas de liaisons numériques, principalement car ces dernières nécessitent des infrastructures de transmission spécifiques et coûteuses et des logiciels élaborés de gestion des signaux.

Le facteur économique freine donc particulièrement l'expansion des réseaux tels que les réseaux GSM et PCS. A titre d'exemple, dans le cas d'une interface A, l'implantation d'un contrôleur de station de base BSC tout comme la mise en conformité d'un commutateur de téléphonie classique (par exemple filaire) aux réseaux GSM et PCS sont peu coûteux. En revanche, la mise en place de la liaison numérique supportant le protocole numérique vers le MSC est onéreuse.

L'article HEINZ M : "SS7-GATEWAYS" FUNKSCHAU , FRANZIS-VERLAG K.G. MUNCHEN, DE, Vol. 72, n°3, 22 janvier 1999 (199-01-22), pages 68-70, XP00083879, ISSN : 0016-2841 décrit des passerelles pour échanger des signaux de signalisation entre un réseau de téléphonie analogique utilisant le système de signalisation SS7 et un réseau de télécommunication à commutation de paquets utilisant le protocole Internet.

Le document EP 0 462 728 décrit un réseau de radiocommunication comportant un contrôleur de stations de base capable de communiquer avec un commutateur du service mobile, via un réseau téléphonique analogique, lorsqu'un téléphone mobile établit une communication avec un poste fixe, appartenant au réseau téléphonique analogique, et situé dans la région où est situé ce commutateur du service mobile. Ce contrôleur de stations de base comporte un transcodeur de signaux de signalisation pour assurer la compatibilité avec le système de signalisation CCITT n°7.

Afin de permettre le déploiement de réseaux de radiocommunication, dans des zones où le réseau téléphonique est analogique, la présente invention a pour but de réaliser un système de transmission fiable entre deux équipements d'un réseau de radiocommunication : entre une station de base et un contrôleur de station de base, et/ou entre un contrôleur de station de base et un commutateur d'un service mobile. Ces signaux numériques comprennent des informations dites de signalisation et des informations de type voix et/ou données. Ces informations de signalisation contiennent des informations dites de gestion et des informations dites de transmission fiabilisée.

La présente invention propose à cet effet un système de transmission de signaux numériques selon le protocole de transmission numérique de l'interface A, entre deux équipements d'un réseau de radiocommunication, de type GSM ou PCS, un premier desdits équipements étant une ou plusieurs station(s) de base et un contrôleur de station de base, et un deuxième desdits équipements étant un commutateur d'un service mobile ; lesdits signaux numériques comprenant des informations dites de signalisation et des informations de type voix et/ou données, lesdites informations de signalisation contenant des informations dites de gestion et des informations dites de transmission fiabilisée ; lesdits équipements étant reliés entre eux par au moins une liaison analogique comprenant plusieurs circuits de communications d'un réseau de communication analogique ; ledit système comprenant :
- des moyens de conversion numérique-analogiquequi assurent la conversion desdites informations de type voix et/ou données pour obtenir des informations de type voix et/ou données sous forme analogique de largeur de bande compatible avec ladite liaison analogique, et des moyens d'émission d'informations analogiques à travers l'un des circuits de ladite liaison analogique
- des moyens de réception d'informations analogiques à partir de ladite liaison analogique, et des moyens de conversion analogique-numérique pour la réception desdits signaux à partir de ladite liaison analogique ;
ledit système étant caractérisé en qu'il comprend en outre, pour l'émission desdits signaux sur ladite liaison analogique :
- des moyens de séparation desdites informations de signalisation et desdites informations de type voix et/ou données, aptes à fournir ces dernières auxdits moyens de conversion numérique-analogique afin de les convertir sous forme analogique ;
- des moyens d'extraction aptes à extraire des informations de gestion à partir des informations de signalisation séparées par lesdits moyens de séparation,
- des moyens de transcodage aptes à transcoder lesdites informations de gestion selon un autre protocole numérique, de type IP,
- et des moyens de fiabilisation des informations de gestion transcodées, selon un protocole numérique de type TCP (Transfer Control Protocol en anglais), ces moyens de fiabilisation étant aptes à ajouter aux signaux selon le protocole IP, des informations supplémentaires de contrôle de la communication afin d'obtenir des informations de signalisation dites fiabilisées, puis les fournir auxdits moyens de conversion numérique-analogique, afin de les convertir sous forme analogique ;
ledit système comprenant, pour une réception desdits signaux numériques à partir de ladite liaison analogique :
- des moyens de transformation aptes à recevoir des informations de gestion fiabilisées fournies par lesdits moyens de conversion numérique-analogique, puis les transformer en des informations de gestion transcodées,
- des moyens de codage des informations de gestion transcodées en des informations de gestion selon ledit protocole de transmission numérique,
- des moyens de combinaison aptes à ajouter des informations de transmission fiabilisée à ces informations de gestion pour former des informations de signalisation,
- et des moyens de mélange des informations de signalisation fournies par les moyens de combinaison, avec des informations de type voix et/ou données fournies par lesdits moyens de conversion analogique-numérique, pour reconstituer les signaux numériques.aptessaptesaptes

Le système de transmission ainsi caractérisé est fiable grâce à la fiabilisation des informations de gestion transcodées, par l'utilisation d'un protocole numérique de type TCP (Transfer Control Protocol en anglais) associé au protocole IP pour obtenir des informations de signalisation dites fiabilisées. De façon générale, le protocole TCP ajoute aux signaux selon un protocole IP des informations supplémentaires de contrôle de la communication. Le protocole TCP donne des informations de signalisation fiabilisées car ce protocole remplace, par des informations de contrôle, les informations de transmission fiabilisée selon le protocole numérique initial et éliminées par les moyens d'extraction.

Le système de transmission selon l'invention permet d'utiliser de manière fiable une liaison analogique préexistante non prévue initialement pour la transmission de signaux numériques. La liaison analogique appartient par exemple à un réseau analogique de téléphonie commuté (RTC) fixe ou à un réseau de satellites. A titre d'exemple, après l'installation de BSC et éventuellement l'adaptation de MSC au réseau GSM et PCS, le système de transmission selon l'invention rend possible la mise en place d'une interface A. On peut ainsi implanter de BSC par exemple certaines zones de pays sous équipés ou encore les embarquer en mer, sur une plate-forme pétrolière ou sur un navire, ou encore en vol dans un avion, et les relier aux MSC les plus proches géographiquement ou à des commutateurs préexistants à adapter. De cette façon, on étend la couverture des réseaux GSM et PCS.

Les informations de gestion pouvant appartenir à deux catégories distinctes, le système selon l'invention peut comprendre des moyens de routage des informations de gestion suivant leur catégorie.

C'est par exemple le cas d'une interface A, interface basée sur le système de signalisation par canal sémaphore couramment appelé SS7 (Signalling System number 7). Ainsi, les informations de gestion d'une première catégorie de l'interface A ont trait à la gestion des abonnés (identification, droits..) et à la maintenance. Ce sont des informations entre BSC et MSC c'est-à-dire directement générées ou interprétées par ) l'un ou l'autre des deux équipements. Les informations d'une deuxième catégorie concernent la gestion des communications (appel, libération...) entre stations mobiles MS et MSC transitant par le BSC. Ces informations sont transparentes au BSC qui joue alors un simple rôle de répéteur en émettant les informations de gestion reçues sans aucune interprétation du ) contenu.

Les informations de chaque catégorie sont différenciées à l'aide d'informations de discrimination. Ainsi, les moyens de routage selon l'invention sont capables à partir de ces informations de discrimination d'indiquer le chemin à effectuer.

Le réseau de radiocommunication selon l'invention peut être un réseau de type GSM ou PCS.

Selon l'invention, un premier équipement peut comprendre une ou plusieurs station(s) de base (BTS) et un contrôleur de station de base (BSC) et un deuxième équipement est un commutateur d'un service mobile (MSC).

La BTS a en charge la transmission radio et réalise l'ensemble des mesures radio nécessaires pour vérifier qu'une communication en cours se déroule correctement. La BTS gère aussi l'échange des informations de signalisation entre mobiles.

Le BSC a pour fonction principale de gérer la ressource radio. Il concentre aussi les circuits vers le MSC.

Le MSC gère l'établissement des communications entre mobiles et autres MSC.

Selon l'invention, le protocole de transmission numérique peut être le protocole de l'interface A.

Selon l'invention, la liaison analogique peut appartenir à un réseau choisi parmi un réseau hertzien, satellitaire et un réseau filaire.

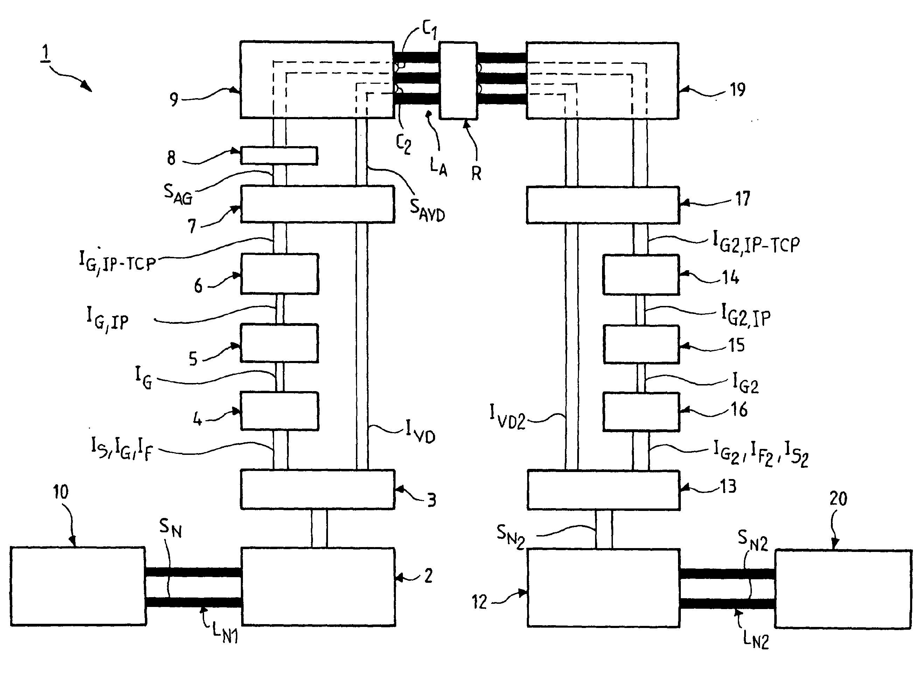

Les caractéristiques et objets de la présente invention ressortiront de la description détaillée donnée ci-après en regard de la figure annexée, présentée à titre illustratif et nullement limitatif.

La figure unique est une représentation schématique d'un système de transmission selon l'invention.

La figure représente un système 1 selon l'invention de transmission de signaux numériques S_{N} entre deux équipements 10, 20. Le premier équipement est un contrôleur de station de base (BSC) 10 et le deuxième équipement est un commutateur d'un service mobile (MSC) 20 d'un réseau de radiocommunication de type GSM ou PCS utilisant un protocole de transmission numérique de l'interface A.

Les équipements 10, 20 sont reliés entre eux par deux sections de liaisons numériques MIC L_{N1} et L_{N2} de faibles longueurs respectivement disposées en sortie du BSC 10 et du MSC 20. Entre ces liaisons L_{N1} et L_{N2} est placée une liaison analogique LA comprenant plusieurs circuits de communications c₁ et c₂ d'un réseau de communication analogique R.

Le système 1 comprend en outre un ensemble de moyens de fonctionnalité différente utilisés successivement pour la transmission d'un signal d'un équipement à l'autre, intercalés côté BSC 10 entre L_{N1} et R et côté MSC 20 entre R et L_{N2}.

Ces moyens sont décrits ci-dessous par ordre d'utilisation en choisissant comme point de départ le BSC 10 et en précisant le chemin parcouru ainsi que l'évolution d'un signal numérique S_{N}.

A titre d'exemple, ce signal numérique S_{N} contient des informations de signalisation I_{S} et des informations de type voix et/ou données I_{VD.} De plus, les informations de signalisation I_{S} comprennent des informations de gestion I_{G} et des informations de transmission fiabilisée I_{F} selon le protocole numérique de l'interface A. Les informations de transmission fiabilisée I_{F} incluent notamment les caractéristiques physiques des liaisons numériques utilisées ainsi que des éléments de fiabilisation de la transmission des informations de gestion.

Notons que le réseau GSM présentant une architecture en couches, les informations de transmission fiabilisée I_{F} sont contenues dans la couche MTP (Message Transfert Part en anglais).

D'abord interviennent des moyens de réception 2 du signal S_{N} émis par le BSC 10 et transmis par la section de liaison numérique L_{N1}.

Ensuite, il existe des moyens de séparation 3 des informations de signalisation I_{S} et des informations de type voix et/ou données I_{VD}, suivis de moyens d'extraction 4 des informations de gestion I_{G} des informations de signalisation I_{S}.

Des moyens de transcodage 5 selon le protocole numérique IP transforment les informations de gestion I_{G} en informations de gestion transcodées I_{G,IP.} Ces moyens 5 sont associés à des moyens de fiabilisation 6 à partir du protocole numérique TCP donnant des informations de gestion fiabilisées I_{G,IP-TCP.}

Ensuite, des moyens de conversion numérique-analogique 7 permettent de transformer les informations de gestion fiabilisées I_{G,IP-TCP} et les informations de type voix et/ou données I_{VD} sous forme de signaux analogiques S_{AG} et S_{AVD} avec des largeurs de bande compatibles avec la liaison analogique L_{A}.

De plus, les informations de gestion appartiennent à deux catégories distinctes de l'interface A c'est-à-dire à la couche BSSMAP (BSS Management Application Part en anglais) qui régit le dialogue entre BSC et MSC pour tous les informations de gestion ayant trait à la ressource radio, et à la couche DTAP (Direct Transfer Application Part en anglais) permettant de rendre transparent le BSC aux informations de gestion entre MS et MSC. Le système 1 comprend ainsi des moyens de routage 8 des informations de gestion suivant leur catégorie.

Des moyens d'émission 9 permettent le transfert des signaux S_{AG} et S_{AVD} respectivement à travers les circuits c₁ et c₂ de la liaison analogique LA jusqu'aux moyens de réception 19 disposés côté MSC 20.

Des moyens de conversion analogique-numérique 17 convertissent le signal S_{AG} en informations de gestion fiabilisées I_{G2,IP-TCP} ainsi que le signal S_{AVD} en informations de type voix et/ou données I_{VD2}.

A la suite de ces moyens 17, des moyens de transformation 14 ont pour fonction de supprimer les informations liées à la fiabilisation par le protocole TCP afin d'obtenir des informations de gestion I_{G2,IP}.

Ensuite, des moyens de codage 15 remplacent les informations de gestion transcodées I_{G2,IP} par des informations de gestion I_{G2} selon le protocole numérique de l'interface A.

Pour fiabiliser ces informations de gestion selon le protocole de l'interface A, des moyens de combinaison 16 ajoutent des informations de transmission fiabilisée I_{F2} à ces informations de gestion I_{G2} pour former des informations de signalisation I_{S2}.

Enfin, des moyens de mélange 13 des informations de signalisation I_{S2} avec les informations voix et/ou données I_{VD2} suivis de moyens d'émission 12 permettent la réception d'un signal S_{N2} par le MSC 20 à travers la section de liaison numérique L_{N2}.

Notons que la transmission étant bidirectionnelle, l'ensemble des moyens précédemment décrits peut exister à proximité de chacun des équipements 10, 20.

Bien entendu, la description qui précède a été donnée à titre purement illustratif. On pourra sans sortir du cadre de l'invention, tel que défini par les revendications, remplacer tout moyen par un moyen équivalent.

## Revendications

1. Système de transmission (1) de signaux numériques (S_{N}, S_{N2}) selon le protocole de transmission numérique de l'interface A, entre deux équipements d'un réseau de radiocommunication, de type GSM ou PCS, un premier desdits équipements (10) étant une ou plusieurs station(s) de base (BTS) et un contrôleur de station de base (BSC), et un deuxième desdits équipements (20) étant un commutateur d'un service mobile (MSC) ; lesdits signaux numériques (s_{N}, s_{N2}) comprenant des informations dites de signalisation (I_{S}, I_{S2}) et des informations de type voix et/ou données (I_{VD}, I_{VD2}), lesdites informations de signalisation (I_{S}, I_{S2}) contenant des informations dites de gestion (I_{G}, I_{G2}) et des informations dites de transmission fiabilisée (I_{F}, I_{F2}); lesdits équipements étant reliés entre eux par au moins une liaison analogique (L_{A}) comprenant plusieurs circuits de communications (C₁, C₂) d'un réseau de communication analogique; ledit système comprenant :
- des moyens de conversion numérique-analogique (7) qui assurent la conversion desdites informations de type voix et/ou données (I_{VD}) pour obtenir des informations de type voix et/ou données sous forme analogique (S_{AVD}) de largeur de bande compatible avec ladite liaison analogique (L_{A}), et des moyens (9) d'émission d'informations analogiques à travers l'un des circuits (c₁) de ladite liaison analogique ;
- des moyens (19) de réception d'informations analogiques à partir de ladite liaison analogique, et des moyens (17) de conversion analogique-numérique pour la réception desdits signaux à partir de ladite liaison analogique ;
ledit système étant **caractérisé en qu'**il comprend en outre, pour l'émission desdits signaux sur ladite liaison analogique :
- des moyens de séparation (3) desdites informations de signalisation (I_{S}, I_{G}, I_{F}) et desdites informations de type voix et/ou données (VD), aptes à fournir ces dernières auxdits moyens de conversion numérique-analogique (7) afin de les convertir sous forme analogique (S_{AVD}) ;
- des moyens d'extraction (4) aptes à extraire des informations de gestion (I_{G}) à partir des informations de signalisation (I_{S}, I_{G}, I_{F}) séparées par lesdits moyens de séparation (3),
- des moyens de transcodage (5) aptes à transcoder lesdites informations de gestion (I_{G}) selon un autre protocole numérique, de type IP,
- et des moyens de fiabilisation (6) des informations de gestion transcodées (I_{G,IP}), selon un protocole numérique de type TCP (Transfer Control Protocol en anglais), ces moyens de fiabilisation étant aptes à ajouter aux signaux selon le protocole IP, des informations supplémentaires de contrôle de la communication afin d'obtenir des informations de signalisation dites fiabilisées (I_{G,IP-TCP}), puis les fournir auxdits moyens (7) de conversion numérique-analogique, afin de les convertir sous forme analogique (S_{AG}) ;
ledit système comprenant, pour une réception desdits signaux numériques à partir de ladite liaison analogique :
- des moyens de transformation (14) aptes à recevoir des informations de gestion fiabilisées (I_{G2,IP-TCP}) fournies par lesdits moyens (7) de conversion numérique-analogique, puis les transformer en des informations de gestion transcodées (I_{G2,IP}),
- des moyens de codage (15) des informations de gestion transcodées (I_{G2,IP}) en des informations de gestion (I_{G2}) selon ledit protocole de transmission numérique,
- des moyens de combinaison (16) aptes à ajouter des informations de transmission fiabilisée (I_{F2}) à ces informations de gestion (I_{G2}) pour former des informations de signalisation (I_{S2}),
- et des moyens de mélange (13) des informations de signalisation (I_{S2})fournies par les moyens de combinaison, avec des informations de type voix et/ou données (I_{VD2}) fournies par lesdits moyens (17) de conversion analogique-numérique, pour reconstituer les signaux numériques (S_{N2}).

2. Système de transmission (1) selon la revendication 1, **caractérisé en ce que**, lesdites informations de gestion (S_{AG}) appartenant à deux catégories distinctes, ledit système comprend en outre des moyens (8) de routage desdites informations de gestion (S_{AG}) suivant leur catégorie.

3. Système de transmission (1) selon la revendication 1, **caractérisé en ce que** ladite liaison analogique (L_{A}) appartient à un réseau (R) choisi parmi un réseau hertzien, satellitaire et un réseau filaire.

## Claims

1. System (1) for transmission of digital signals (S_{N}, S_{N2}) according to the digital transmission protocol of the A interface between two units of a radio communication network, of GSM or PCS type, a first of said units (10) being one or more base station(s) (BTS) and a base station controller (BSC), and a second of said units (20) being a mobile services switching centre (MSC); said digital signals (S_{N}, S_{N2}) comprising signalling information (Is, I_{S2}) and voice and/or data type information (I_{VD}, I_{VD2}), said signalling information (I_{S}, I_{S2}) containing management information (I_{G}, I_{G2}) and reliable transmission information (I_{F}, I_{F2}); said units being interconnected by at least one analog link (L_{A}) comprising a plurality of communication circuits (C₁, C₂) of an analog communication network; said system comprising:
- digital-analog conversion means (7) that assure the conversion of said voice and/or data type information (I_{VD}) to obtain voice and/or data type information in analog form (S_{AVD}) with a bandwidth compatible with said analog link (L_{A}) and means (9) for sending analog information over one of the circuits (C₁) of said analog link;
- means (19) for receiving analog information from said analog link and analog-digital conversion means (17) for receiving said signals from said analog link;
said system being **characterised in that** it further comprises, for sending said signals over said analog link:
- means (3) for separating said signalling information (I_{S}, I_{G}, I_{F}) and said voice and/or data type information (V_{D}), adapted to supply the latter to said digital-analog conversion means (7) in order to convert them to analog form (S_{AVD});
- extraction means (4) adapted to extract management information (I_{G}) from signalling information (I_{S}, I_{G}, I_{F}) separated by said separation means (3),
- transcoding means (5) adapted to transcode said management information (I_{G}) according to another digital protocol, of IP type, and
- means (6) for making the transcoded management information (I_{G}, _{IP}) reliable, in accordance with a digital protocol of TCP (Transfer Control Protocol) type, these means being adapted to add to the signals according to the IP protocol additional call control information in order to obtain signalling information (I_{G,IP-TCP}) that has been made reliable, and then to supply it to said digital-analog conversion means (7), in order to convert it to analog form (S_{AG});
said system comprising, for reception of said digital signals from said analog link:
- conversion means (14) adapted to receive management information (I_{G2,IP-TCP}) that has been made reliable supplied by said digital-analog conversion means (7) and then to transform it into transcoded management information (I_{G2,IP}),
- means (15) for coding the transcoded management information (I_{G2,IP}) into management information (I_{G2}) according to said digital transmission protocol,
- combination means (16) adapted to add transmission information (I_{F2}) that has been made reliable to this management information (I_{G2}) to form signalling information (I_{S2}), and
- means (13) for mixing the signalling information (I_{S2}) supplied by the combination means with voice and/or data type information (I_{VD2}) supplied by said analog-digital conversion means (17) to reconstitute the digital signals (S_{N2}).

2. Transmission system (1) according to claim 1, **characterised in that**, said management information (S_{AG}) belonging to two different categories, said system further comprises means (8) for routing said management information (S_{AG}) according to its category.

3. Transmission system (1) according to claim 1, **characterised in that** said analog link (L_{A}) belongs to a network (R) chosen from a radio, satellite network and a cable network.

## Patentansprüche

1. System zur Übertragung (1) von digitalen Signalen (S_{N}, S_{N2}) gemäß dem digitalen Übertragungsprotokoll der Schnittstelle A, zwischen zwei Ausrüstungen eines Funkkommunikationsnetzes, vom Typ GSM oder PCS, wobei eine erste dieser Ausrüstungen (10) eine oder mehrere Basisstation(en) (BTS) und ein Basisstationcontroller (BSC) sind, und eine zweite dieser Ausrüstungen (20) eine Mobilvermittlungsstelle (MSC) ist; diese digitalen Signale (S_{N}, S_{N2}) enthalten so genannte Signalisierungsinformationen (I_{S}, I_{S2}) und Informationen des Typs Sprache und/oder Daten (I_{VD}, I_{VD2}), wobei diese Signalisierungsinformationen (Is, I_{S2}) so genannte Verwaltungsinformationen (I_{G}, I_{G2}) und so genannte Informationen in Sachen zuverlässig gestaltete Übertragung (I_{F}, I_{F2}) enthalten; diese Ausrüstungen sind untereinander durch mindestens eine analoge Verbindung (L_{A}) verbunden, die mehrere Übertragungsstromkreise (C₁, C₂) eines analogen Kommunikationsnetzes einschließt; dieses System beinhaltet:
- Mittel zur Digital-Analog-Umsetzung (7), die die Umsetzung dieser Informationen vom Typ Sprache und/oder Daten (I_{VD})gewährleisten, um Informationen des Typs Sprache und/oder Daten in analoger Form (S_{AVD}) und mit einer Bandbreite zu erhalten, die mit dieser analogen Verbindung (L_{A}) kompatibel ist, und Mittel (9) zum Senden analoger Informationen durch eine der Schaltungen (C₁) dieser analogen Verbindung;
- Mittel (19) zum Empfangen analoger Informationen ausgehend von dieser analogen Verbindung und Mittel (17) zur Analog-Digital-Umsetzung für das Empfangen dieser Signale ausgehend von dieser analogen Verbindung;
wobei dieses System **dadurch gekennzeichnet ist, dass** es außerdem für das Senden dieser Signale auf dieser analogen Verbindung, folgendes einschließt:
- Mittel zum Trennen (3) dieser Signalisierungsinformationen (I_{S}, I_{G}, I_{F}) und dieser Informationen vom Typ Sprache und/oder Daten (VD), die geeignet sind, letztere an diese Mittel zur Digital-Analog-Umsetzung (7) zu liefern, damit sie in analoge Form (S_{AVD}) umgewandelt werden;
- Mittel zum Extrahieren (4), die geeignet sind, Verwaltungsinformationen (I_{G}) auf der Grundlage der Signalisierungsinformationen (I_{S}, I_{G}, I_{F}) zu extrahieren, welche durch diese Mittel zur Trennung (3) getrennt wurden,
- Mittel zur Umcodierung (5), die geeignet sind, diese Verwaltungsinformationen (I_{G}) gemäß einem anderen digitalen Protokoll vom Typ IP umzucodieren,
- und Mittel, um umcodierte Verwaltungsinformationen (I_{G}, I_{P}) zuverlässig zu gestalten (6), gemäß einem digitalen Protokoll vom Typ TCP (auf Englisch "Transfer Control Protocol"), wobei diese Mittel zum Zuverlässigmachen geeignet sind, den Signalen gemäß dem Protokoll IP zusätzliche Informationen zur Überwachung der Verbindung hinzuzufügen, um Signalisierungsinformationen zu erhalten, die als zuverlässig gestaltet (I_{G}, _{IP-TCP}) bezeichnet werden, diese dann an diese Mittel (7) zur Digital-Analog-Umsetzung zu liefern, um sie in analoge Form (S_{AG}) umzuwandeln;
wobei dieses System für den Empfang dieser digitalen Signale ausgehend von dieser analogen Verbindung folgendes einschließt:
- Mittel zur Transformation (14), die geeignet sind, zuverlässig gestaltete Verwaltungsinformationen (I_{G2}, _{IP-TCP}) zu empfangen, welche von diesen Mitteln (7) zur Digital-Analog-Umsetzung geliefert werden, sie dann in umcodierte Verwaltungsinformationen (I_{G2}, _{IP}) umzuwandeln,
- Mittel zur Codierung (15) der Verwaltungsinformationen (I_{G2}, _{IP}), welche gemäß diesem digitalen Übertragungsprotokoll in Verwaltungsinformationen (I_{G2}) umcodiert wurden,
- Mittel zur Kombination (16), die geeignet sind, zu diesen Verwaltungsinformationen (I_{G2}) zuverlässig gestaltete Übertragungsinformationen (I_{F2}) hinzuzufügen, um Signalisierungsinformationen (I_{S2}) zu bilden,
- und Mittel zum Mischen (13) der von den Mitteln zur Kombination gelieferten Signalisierungsinformationen (I_{S2}) mit Informationen des Typs Sprache und/oder Daten (I_{VD2}), die von diesen Mitteln (17) zur Analog-Digital-Umsetzung geliefert werden, um die digitalen Signale (S_{N2}) zurück zu gewinnen.

2. System zur Übertragung (1) gemäß Anspruch 1, **dadurch gekennzeichnet, dass** da diese Verwaltungsinformationen (S_{AG}) zu zwei verschiedenen Kategorien gehören, dieses System außerdem Mittel (8) zum Routing dieser Verwaltungsinformationen (S_{AG}) je nach ihrer Kategorie enthält.

3. System zur Übertragung (1) gemäß Anspruch 1, **dadurch gekennzeichnet, dass** diese analoge Verbindung (L_{A}) zu einem Netz (R) gehört, das ausgewählt wird aus einem Richtfunknetz, einem Satellitennetz und einem leitungsgebundenen Netz.
